## Europäisches Patentamt

## European Patent Office

## Office européen des brevets

(11) Numéro de publication: **0 264 330**
**B1**

(12) **FASCICULE DE BREVET EUROPEEN**

(45) Date de publication du fascicule du brevet:
09.05.90

(51) Int. Cl.⁵: **B26D 3/22,** B02C 18/06,
A47J 43/25

(21) Numéro de dépôt: **87402248.6**

(22) Date de dépôt: **08.10.87**

(54) Machine destinée à couper des produits alimentaires, tels que notamment des légumes.

(30) Priorité: **15.10.86 FR 8614325**

(43) Date de publication de la demande:
**20.04.88 Bulletin 88/16**

(45) Mention de la délivrance du brevet:
**09.05.90 Bulletin 90/19**

(84) Etats contractants désignés:
**DE ES IT SE**

(56) Documents cités:
**EP-A- 0 099 561**
**DE-A- 3 112 743**
**DE-C- 41 651**
**FR-A- 2 109 123**
**NL-B- 60 859**
**US-A- 1 766 825**
**US-A- 2 130 937**
**US-A- 2 836 825**

(73) Titulaire: **DITO-SAMA, 39 rue de Beauze,**
**F-23200 Aubusson Creuse(FR)**

(72) Inventeur: **Mayeux, Marcel, Saint-Georges Nigremont,**
**F-23500 Felletin(FR)**
Inventeur: **Lallier, Christian, La Chassagne,**
**F-23200 Aubusson(FR)**
Inventeur: **Musseau, Joel, Passage Sarrazin,**
**F-23200 Aubusson(FR)**

(74) Mandataire: **Moncheny, Michel et al, c/o Cabinet**
**Lavoix 2 Place d'Estienne d'Orves, F-75441 Paris**
**Cedex 09(FR)**

ACTORUM AG

## Description

Le présente invention concerne une machine destinée à couper des produits alimentaires, tels que notamment des légumes.

Plus particulièrement, l'invention concerne une machine du type comportant un bâti supportant une trémie de chargement des produits, un plateau de coupe, un plateau d'éjection des produits coupés, disposé sous le plateau de couple, et des moyens d'entraînement en rotation du plateau de coupe et du plateau d'éjection.

On connait déjà dans l'état de la technique, tel que décrit par exemple dans le Fr-A 2 109 123, un certain nombre de machines de ce type, mais elles présentent des inconvénients notamment au niveau des risques de dégradation des produits en raison d'un "bourrage" de ceux-ci dans certaines parties des machines des risques de blocage des organes tournants, de la régularité de l'amenée automatique des produits vers l'organe de coupe et enfin du maintien des produits pendant la coupe.

Le but de l'invention est donc de résoudre ces problèmes en proposant une machine dont la structure soit simple, fiable et d'un prix de revient peu élevé, tout en permettant une augmentation du débit de traitement de produits pour une qualité meilleure.

A cet effet, l'invention a pour objet une machine du type tel que décrit précédemment, caractérisée en ce que ledit plateau d'éjection est entraîné en rotation en sens inverse de celui du plateau de coupe.

Avantageusement, le plateau d'éjection est entraîné à une vitesse de rotation supérieure à celle du plateau de coupe.

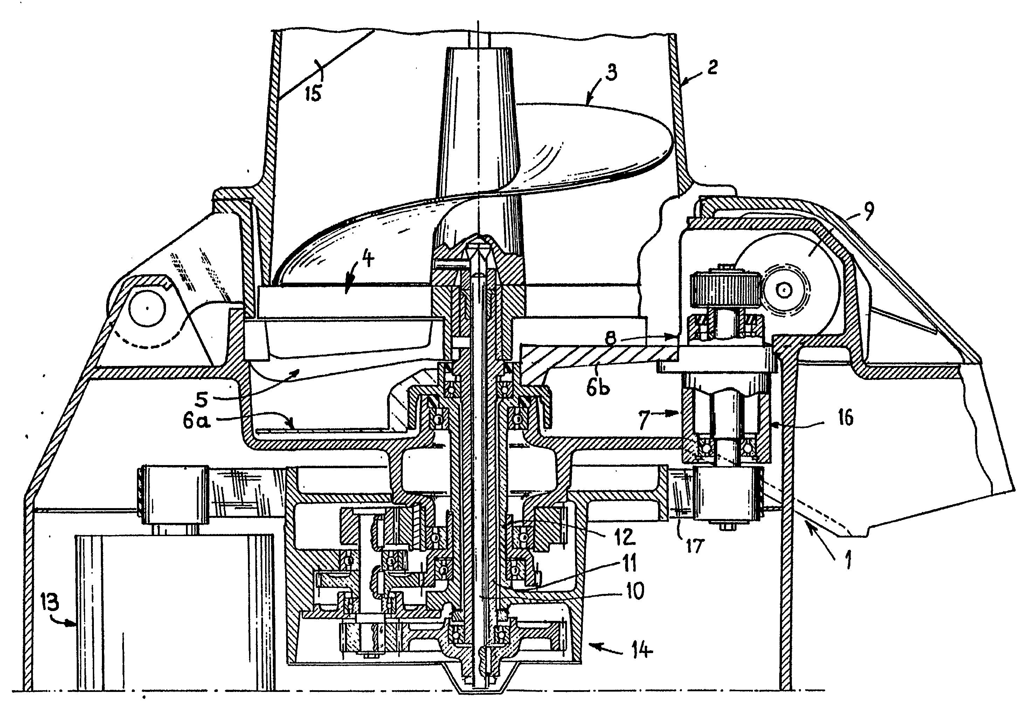

L'invention sera mieux comprise à l'aide de la description qui va suivre, donnée uniquement à titre d'exemple et faite en se référant au dessin annexé, qui représente une vue en coupe d'une machine selon l'invention.

Ainsi qu'on peut le voir sur cette figure, une machine selon l'invention, destinée à couper des produits alimentaires, tels que notamment des légumes, comporte un bâti 1 sur lequel est montée articulée une trémie 2 de chargement des produits, dans laquelle peut être disposée une hélice tournante 3 pour plaquer les produits contre un plateau de coupe 4. Ce plateau de couple étant de type connu en soi, on ne le décrira pas plus en détail.

Cette machine pouvant être équipée de différents moyens de coupe permettant d'obtenir par exemple des bâtonnets ou de la macédoine de légumes, on a représenté sur la partie gauche de cette figure, une machine équipée d'une grille 5 permettant d'obtenir de la macédoine et d'un plateau éjecteur 6a destiné à éjecter la macédoine provenant de la grille vers une première zone d'éjection 7.

Par ailleurs, sur la partie droite de cette figure, on a représenté une machine équipée d'un plateau d'éjection 6b différent du premier, permettant d'éjecter par exemple des pommes de terre coupées en tranches par le plateau de coupe en direction d'une seconde zone d'éjection 8 dans laquelle sont disposés des moyens de coupe 9, pour obtenir des bâtonnets. Ces moyens seront décrits plus en détail par la suite.

La machine selon l'invention comporte également trois arbres coaxiaux 10,11 et 12 disposés les uns dans les autres, L'une des extrémités de l'arbre intérieur 10 est reliée à l'hélice 3, l'une des extrémités de l'arbre intermédiaire 11 est reliée au plateau de coupe 4 et l'une des extrémités de l'ar bre extérieur 12 est reliée au plateau d'éjection 6a ou 6b. Ces liaisons étant de type connu, on ne les décrira pas en détail.

Les autres extrémités desdits arbres sont reliées à des moyens d'entraînement 13 par des moyens d'engrenage respectifs 14. Ces moyens d'engrenage sont constitués par un certain nombre de satellites coopérant avec des planétaires entraînés en rotation par les moyens d'entraînement 13. Ces moyens d'engrenage sont conçus de manière que ladite hélice et ledit plateau d'éjection sont entraînés en rotation en sens inverse de celui du plateau de coupe. De plus, le plateau d'éjection est entraîné à une vitesse de rotation supérieure à celle du plateau de coupe qui est elle-même supérieure à celle de l'hélice, de manière à éviter tout bourrage de produit.

Les moyens d'engrenage étant de type connu en soi et ne présentant pas de difficultés particulières de mise en oeuvre, on ne les décrira pas plus en détail.

Les moyens d'entraînement sont constitués par un seul moteur par exemple électrique, ce qui permet en cas de problème d'arrêter la rotation de tous les organes tournants en même temps.

Par ailleurs, un organe de butée déformable 15, tel qu'un languette souple, est disposé dans ladite trémie au-dessus du plateau de coupe de manière à orienter les produits dans la trémie pour favoriser leur entrée dans l'hélice d'acheminement.

Ainsi qu'il a été mentionné précédemment, la machine selon l'invention comporte deux zones d'éjection 7 et 8 des produits coupés, constituées par exemple par deux goulottes disposées l'une au-dessus de l'autre et destinées à être associées à des plateaux d'éjection de produits de formes différentes comme cela a été mentionné précédemment. Les moyens de coupe 9 sont par exemple disposés dans la goulotte supérieure en regard du plateau d'éjection 6b permettant d'éjecter des produits coupés en tranches. Ces moyens de coupe 9 comprennent plusieurs disques fixés sur un arbre d'entraînement relié aux moyens d'entraînement 13 par des moyens d'engrenage 16 de type connu en soi. Ces disques sont fixés sur l'arbre à une distance prédéterminée les uns des autres et parallèlement à l'axe de ladite goulotte, de manière à déterminer la largeur de coupe des produits. Ces moyens permettent par exemple de couper des tranches de pommes de terre provenant du plateau d'éjection, dans le sens de la longueur pour obtenir des frites. En effet, durant la coupe, les pommes de terre sont plaquées contre le plateau de coupe, par l'hélice 3, et les tranches de pomme de terre tombent sur le plateau d'éjection 6b. Celui-ci étant entraîné en rotation, les tranches de pomme de terre sont plaquées, sous l'effet de la force centrifuge, contre le rebord de la chambre de coupe, délimitée sous le plateau de coupe, et sont éjectées en direction des moyens de coupe 9 disposés dans la goulotte 8. Ces tranches sont alors coupées en bâtonnets par ces moyens 9.

Il est à noter que les moyens d'engrenage 16, entraînant en rotation les moyens de coupe 9, sont agencés pour entraîner ceux-ci à une vitesse de rotation telle que leur débit est supérieur au débit du plateau de coupe de manière à éviter tout bourrage de produit à ce niveau.

Par ailleurs, ces moyens d'engrenage 16 ainsi que les moyens d'engrenage 14 sont entraînés par une courroie 17 passant sur des chemins de roulement de ces moyens d'engrenage et sur l'arbre de sortie du moteur électrique 13.

La machine selon l'invention peut également être équipée d'une trémie ne comportant pas d'hélice tournante, le plateau d'éjection étant toujours entraîné en rotation en sens inverse de celui du plateau de coupe et à une vitesse de rotation supérieure. Il va de soi également que bien que dans l'exemple de réalisation décrit les zones d'éjection soient constituées par deux goulottes disposées l'une au-dessus de l'autre, d'autres modes de réalisation sont possibles. Ainsi par exemple, ces zones peuvent être ménagées l'une en regard de l'autre dans la paroi de la chambre de coupe.

Enfin, la machine selon l'invention peut faire partie d'une installation plus complète, comportant par exemple une éplucheuse de pommes de terre et des moyens de transfert entre l'éplucheuse et la machine selon l'invention.

## Revendications

1. Machine destinée à couper des produits alimentaires tels que notamment des légumes, du type comportant un bâti (1) supportant une trémie (2) de chargement des produits, un plateau de coupe (4), un plateau d'éjection (6a;6b) des produits coupés, disposé sous le plateau de coupe (4), et des moyens (13) d'entraînement en rotation du plateau de coupe et du plateau d'éjection, caractérisée en ce que ledit plateau d'éjection est entraîné en rotation en sens inverse de celui du plateau de coupe.

2. Machine selon la revendication 1, caractérisée en ce que le plateau d'éjection est entraîné à une vitesse de rotation supérieure à celle du plateau de coupe.

3. Machine selon la revendication 1 ou 2, caractérisée en ce qu'en outre une hélice tournante (3) est disposée dans ladite trémie (2).

4. Machine selon la revendication 3, caractérisée en ce que ladite hélice (3) est entraînée en rotation en sens inverse de celui du plateau de coupe (4).

5. Machine selon la revendication 4, caractérisée en ce que l'hélice (3) est entraînée à une vitesse de rotation inférieure à celle du plateau de coupe.

6. Machine selon l'une quelconque des revendications 3,4 ou 5, caractérisée en ce qu'elle comporte trois arbres coaxiaux (10,11,12) disposés les uns dans les autres, l'une des extrémités de l'arbre intérieur (10) étant reliée à l'hélice (3), l'une des extrémités de l'arbre intermédiaire (11) étant reliée au plateau de coupe (4) et l'une des extrémités de l'arbre extérieur (12) étant reliée au plateau d'éjection (6a;6b), tandis que les autres extrémités desdits arbres sont reliées aux moyens d'entraînement (13) par des moyens d'engrenage respectifs (14).

7. Machine selon l'une quelconque des revendications précédentes, caractérisée en ce que les moyens d'entraînement comportent un seul moteur (13).

8. Machine selon l'une quelconque des revendications précédentes, caractérisée en ce qu'un organe de butée déformable (15) est disposé dans ladite trémie (2) au-dessus du plateau de coupe (4).

9. Machine selon l'une quelconque des revendications précédentes, caractérisée en ce qu'elle comporte deux zones d'éjection (7,8) de produits coupés, destinées à être associées à des plateaux d'éjection (6a; 6b) de produits de formes différentes.

10. Machine selon la revendication 9, caractérisée en ce que lesdites zones d'éjection sont constituées par des goulottes disposées l'une au-dessus de l'ature.

11. Machine selon la revendication 9 ou 10, caractérisée en ce que des moyens de coupe (9) sont disposés dans l'une desdites zones d'éjection.

12. Machine selon les revendications 10 et 11, caractérisée en ce que les moyens de coupe sont disposés dans la goulotte supérieure (8).

13. Machine selon la revendication 11 ou 12, caractérisée en ce que les moyens de coupe (9) comprennent plusieurs disques fixés sur un arbre d'entraînement relié aux moyens d'entraînement (13) par des moyens d'engrenage (16), lesdits disques étant fixés sur l'arbre à une distance prédéterminée les uns des autres et parallèlement à l'axe de ladite zone d'éjection, de manière à déterminer la largeur de coupe des produits.

## Claims

1. Machine for chopping food products, especially vegetables, of the type comprising a frame (1) supporting a product feed hopper (2), a chopping plate (4), a chopped products ejector plate (6a; 6b) disposed below the chopping plate (4), and means (13) for rotating the chopping plate and ejector plate, characterised in that said ejector plate is rotated in the opposite direction to the chopping plate.

2. Machine as claimed in claim 1, characterised in that the ejector plate is driven at a higher speed of rotation than the chopping plate.

3. Machine as claimed in claim 1 or 2, characterised in that in addition a rotating helix (3) is disposed in the said hopper (2).

4. Machine as claimed in claim 3, characterised in that said helix (3) is rotated in the opposite direction to the chopping plate (4).

5. Machine as claimed in claim 4, characterised in that the helix (3) is driven at lower speed of rotation than the chopping plate.

6. Machine as claimed in any one of claims 3, 4 or 5, characterised in that it incorporates three coaxial shafts (10, 11, 12) disposed inside each other, one end of the inner shaft (10) being connected to the helix (3), one end of the intermediate shaft (11) being connected to the chopping plate (4) and one end of the outer shaft (12) being connected to the ejector plate (6a; 6b), whilst the other ends of the said shafts are connected by respective gearing means (14) to the means of driving (13).

7. Machine as claimed in any one of the preceding claims, characterised in that the means of driving comprise a single motor (13).

8. Machine as claimed in any one of the preceding claims, characterised in that a flexible stop device (15) is disposed in the said hopper (2) above the chopping plate (4).

9. Machine as claimed in any one of the preceding claims, characterised in that it comprises two chopped products ejection zones (7, 8), designed to be associated with ejector plates (6a; 6b) for products of different shapes.

10. Machine as claimed in claim 9, characterised in that the said ejection zones consist of spouts disposed one above the other.

11. Machine as claimed in claim 9 or 10, characterised in that chopping means (9) are disposed in one of the said ejection zones.

12. Machine as claimed in claims 10 and 11, characterised in that the chopping means are disposed in the top spout (8).

13. Machine as claimed in claim 11 or 12, characterised in that the chopping means (9) comprise several discs fixed to a drive shaft connected to the drive means (13) by gearing means (16), the said discs being fixed to the shaft at a predetermined distance from each other and parallel to the axis of the said ejection zone, so as to determine the width of cut of the products.

**Patentansprüche**

1. Maschine zum Schneiden von Lebensmittelerzeugnissen, insbesondere Gemüse, mit einem einen Trichter (2) zur Zuführung der Erzeugnisse tragenden Gehäuse (1), einem Schneidteller (4), einem unter den Schneidteller (4) angeordneten Auswerfteller (6a; 6b) für die geschnittenen Erzeugnisse und Antriebsmitteln (13) zum Drehantrieb des Schneidtellers und des Auswerftellers, dadurch gekennzeichnet, daß der Auswerfteller in einem zu dem des Schneidtellers entgegengesetzten Sinn drehend angetrieben wird.

2. Maschine nach Anspruch 1, dadurch gekennzeichnet, daß der Auswerfteller mit einer größeren Geschwindigkeit angetrieben wird als die des Schneidtellers.

3. Maschine nach Anspruch 1 oder 2, dadurch gekennzeichnet, daß in dem Trichter (2) außerdem eine drehbare Schnecke (3) angeordnet ist.

4. Maschine nach Anspruch 3, dadurch gekennzeichnet, daß die Schnecke (3) drehend angetrieben wird in einem zu dem des Schneidtellers (4) entgegengesetzten Sinn.

5. Maschine nach Anspruch 4, dadurch gekennzeichnet, daß die Schnecke (3) mit einer niedrigeren Geschwindigkeit angetrieben wird als die des Schneidtellers.

6. Maschine nach einem der Ansprüche 3, 4 oder 5, dadurch gekennzeichnet, daß drei ineinander angeordnete koaxiale Wellen (10, 11, 12) vorgesehen sind, wobei eines der Enden der inneren Welle (10) mit der Schnecke (3) verbunden ist, eines der Enden der mittleren Welle (11) mit dem Schneidteller (4) verbunden ist und eines der Enden der äußeren Welle (12) mit dem Auswerfteller (6a; 6b) verbunden ist, wogegen die anderen Enden der Wellen über jeweilige Getriebemittel (14) mit den Antriebsmitteln (13) verbunden sind.

7. Maschine nach einem der vorhergehenden Ansprüche, dadurch gekennzeichnet, daß die Antriebsmittel einen einzigen Motor (13) umfassen.

8. Maschine nach einem der vorhergehenden Ansprüche, dadurch gekennzeichnet, daß in dem Trichter (2) über dem Schneidteller (4) ein verformbares Anschlagelement (15) angeordnet ist.

9. Maschine nach einem der vorhergehenden Ansprüche, dadurch gekennzeichnet, daß zwei Auswerfbereiche (7, 8) für die geschnittenen Erzeugnisse vorgesehen sind, die Auswerftellern (6a; 6b) für Erzeugnisse mit verschiedenen Formen zugeordnet sind.

10. Maschine nach Anspruch 9, dadurch gekennzeichnet, daß die Auswerfbereiche durch übereinander angeordnete Rinnen gebildet sind.

11. Maschine nach Anspruch 9 oder 10, dadurch gekennzeichnet, daß in dem einen der Auswerfbereiche Schneidmittel (9) angeordnet sind.

12. Maschine nach Anspruch 10 und 11, dadurch gekennzeichnet, daß die Schneidmittel in der oberen Rinne (8) angeordnet sind.

13. Maschine nach Anspruch 11 oder 12, dadurch gekennzeichnet, daß die Schneidmittel (9) mehrere auf einer über Getriebemittel (16) mit den Antriebsmitteln (13) verbundenen Welle befestigte Scheiben enthält, wobei die Scheiben auf der Welle in einem vorgegebenen Abstand übereinander und parallel zur Achse des Auswerfbereichs so angeordnet sind, daß die Schnittgröße des Erzeugnisses bestimmt wird.

EP 0 264 330 B1